# EUROPÄISCHE PATENTSCHRIFT

(11) **EP 0 358 087 B1**
(45) Veröffentlichungstag und Bekanntmachung des Hinweises auf die Patenterteilung: **12.07.1995**
(21) Anmeldenummer: 89115890.9
(22) Anmeldetag: 29.08.1989
(51) Int. Cl.: C08G 63/685, C08G 64/00, C08G 71/00, C08G 18/50, C08G 18/71, C08G 18/08, C08G 65/28, D06P 5/08, D06P 3/66, D06P 1/52

(54) **Quaternierte Kondensationsprodukte**
Quaternized condensation products
Produits de condensation quaternisés

(30) Priorität: 03.09.1988 DE 3829974
(43) Veröffentlichungstag der Anmeldung: 14.03.1990
(73) Patentinhaber: BASF Aktiengesellschaft, 67063 Ludwigshafen (DE)
(72) Erfinder: Dix, Johannes Peter, Dr., D-6708 Neuhofen (DE); Fikentscher, Rolf, Dr., D-6700 Ludwigshafen (DE); Steenken-Richter, Ingrid, Dr., D-6700 Ludwigshafen (DE)

(56) Entgegenhaltungen:
- EP-A- 0 144 975
- EP-A- 0 223 064
- FR-A- 860 910

## Beschreibung

Die vorliegende Erfindung betrifft quaternierte Kondensationsprodukte aus
A) einem Präkondensat aus einem oder mehreren Trialkanolaminen der allgemeinen Formel I 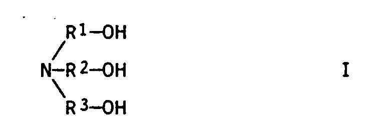 in der die Reste R¹ bis R³ für 1,2-Alkylengruppen mit 2 bis 4 C-Atomen stehen, eines Viskositätsbereiches von 5.000 bis 35.000 mPa.s für Triethanolamin bzw. von 100.000 bis 600.000 mPa.s für Triisopropanolamin oder von 100.000 bis 250.000 mPa.s für ein Mischkondensat aus Triethanolamin und Triisopropanolamin (jeweils gemessen in unverdünntem Zustand bei 20°C), und
B) 0,01 bis 0,30 mol pro Grammatom Amin-Stickstoff in I einer oder mehrerer der folgenden Verbindungen II:
   a) einer Carbonsäure oder eines Carbonsäurederivates der allgemeinen Formel IIa 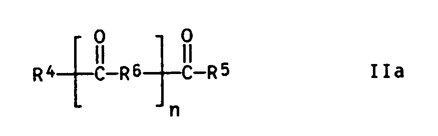 in der
      - n: 0 oder 1
      - R⁴, R⁵: Hydroxylgruppen, ausgenommen für den Fall n=0, oder C₁-C₈-Alkoxygruppen, die im Falle n=0 zu einem fünf- oder sechsgliedrigen Ring verbunden sein können, oder Chlor oder Brom und
      - R⁶: eine Alkylengruppe mit 1 bis 50 C-Atomen, die durch ein oder mehrere nicht benachbarte Sauerstoffatome unterbrochen sein kann,
      bedeuten,
   b) einem Carbonsäureamid der allgemeinen Formel IIb 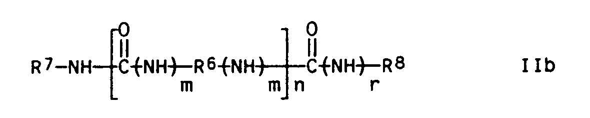 in der
      - m, n, r: 0 oder 1
      - R⁷: Wasserstoff oder eine C₁-C₄-Alkylgruppe und
      - R⁸: Wasserstoff, eine C₁-C₂₅-Alkylgruppe, eine C₂-C₂₅-Alkenylgruppe oder einen Phenylrest, der C₁-C₄-Alkylgruppen, C₁-C₄-Alkoxygruppen sowie Fluor, Chlor oder Brom als Substituenten tragen kann,
      bedeuten,
   c) einem Epihalogenhydrin der allgemeinen Formel IIc 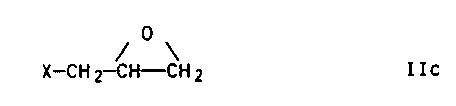 in der
      - X: Chlor oder Brom
      bedeutet,
   d) einer monofunktionellen Verbindung der allgemeinen Formel IId

      R⁹-Y IId

      in der
      - R⁹: eine C₁-C₂₅-Alkylgruppe, eine C₂-C₂₅-Alkenylgruppe oder einen Phenylrest, der C₁-C₄-Alkylgruppen, C₁-C₄-Alkoxygruppen sowie Fluor, Chlor oder Brom als Substituenten tragen kann, und
      - Y: Isocyanat oder eine der Gruppen 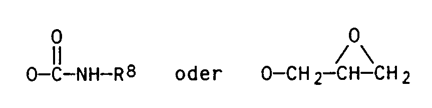
      bedeutet,
   e) einer bifunktionellen Verbindung der allgemeinen Formel IIe

      Z¹-R¹⁰-Z² IIe

      in der
      - R¹⁰: eine Alkylengruppe mit 1 bis 50 C-Atomen, die durch ein oder mehrere nicht benachbarte Sauerstoffatome unterbrochen sein und/oder eine oder mehrere nicht vicinal zueinander stehende Hydroxylgruppen enthalten kann, und
      - Z¹, Z²: Chlor, Brom, Isocyanat oder eine der Gruppen 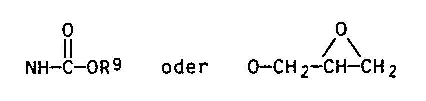
      oder OR⁹ bedeutet,
      und
c) 0,25 bis 1,0 mol pro Grammatom Amin-Stickstoff in I eines Benzylhalogenids der allgemeinen Formel III 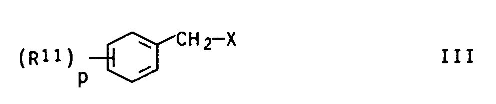 in der
   - p: für 0 bis 2 und
   - R¹¹: für eine C₁-C₄-Alkylgruppe, eine C₁-C₄-Alkoxygruppe, Fluor, Chlor oder Brom
steht.

Außerdem betrifft die Erfindung ein Verfahren zur Herstellung der quaternierten Kondensationsprodukte und deren Verwendung als Nachbehandlungsmittel für die Fixierung von Färbungen und Drucken auf Cellulosefasern enthaltenden textilen Materialien, die mit Reaktivfarbstoffen oder Direktfarbstoffen gefärbt oder bedruckt worden sind, sowie ein Verfahren zu dieser Nachbehandlung.

Cellulosefasern enthaltende textile Materialien, die mit Reaktivfarbstoffen oder Direktfarbstoffen gefärbt oder bedruckt worden sind, werden meist einer Alkaliwäsche in Gegenwart von Tensiden unterworfen, um den nicht auf dem Gewebe fixierten Farbstoff zu entfernen. Mit Hilfe dieser Verfahrensweise erhält man gefärbte oder bedruckte Cellulosematerialien, die zwar ausreichende Waschechtheiten aufweisen, jedoch bezüglich der Wasserechtheit, der Bügelechtheit und der Schweißechtheit verbesserungsbedürftig sind.

Das in der DE-A 35 26 101 beschriebene Nachbehandlungsverfahren mit kationischen Kondensationsprodukten, die durch Umsetzung von Piperazinderivaten mit bifunktionellen Halogen- oder Epoxyverbindungen und anschließende Quaternierung mit Benzylchlorid erhältlich sind, führt zur weitgehenden Behebung der beschriebenen Mängel, jedoch ist in manchen Fällen mit einer Beeinträchtigung der Reib- und vor allem der Lichtechtheit zu rechnen.

Die EP-B 087 147 betrifft Umsetzungsprodukte von Triethanolamin-Kondensaten mit Xylylendichloriden. Diese Produkte werden jedoch nicht auf dem Textilsektor, sondern als Emulsionsspalter, Schmierstoffe und Papierhilfsmittel eingesetzt.

Die EP-A 223 064 behandelt mit Benzylchlorid quaternierte Kondensationsprodukte von Triethanolamin und/oder Triisopropanolamin als Nachbehandlungsmittel für die Fixierung von Reaktivfärbungen. Diese Verbindungen bewirken eine Verbesserung sowohl der Naß- als auch der Reib- und Lichtechtheiten. Zur Erzielung der gewünschten anwendungstechnischen Eigenschaften werden jedoch Trialkanolamin-Kondensate mit hohem Kondensationsgrad, entsprechend einer Viskosität von mindestens 40.000 mPa.s in unverdünntem Zustand im Falle von Triethanolamin und von mindestens 600.000 mPa.s in unverdünntem Zustand im Falle von Triisopropanolamin, benötigt. Die Herstellung derart hochviskoser Polyaminoether ist, wie in der EP-B 087 147 dargelegt, wegen der nur schlecht steuerbaren Kondensationsreaktion im Bereich knapp unterhalb des Gelpunktes sehr problematisch, da hier sehr leicht das Reaktionsgemisch zu einer festen, unlöslichen Masse erstarren kann, die für eine weitere Umsetzung nicht mehr handhabbar ist.

In der FR-A 860 910 werden Kondensate aus Trialkanolaminen und Harnstoff, welche im Anschluß an ihre Herstellung mit einer alkylierenden Verbindung wie Benzylchlorid quaterniert worden sind, als Fixiermittel für mit sauren Farbstoffen gefärbte Cellulosefasern beschrieben.

Der Erfindung lag daher die Aufgabe zugrunde, unproblematisch herstellbare Nachbehandlungsmittel, welche hohe Naßechtheiten gewährleisten, ohne die Reib- und Lichtechtheiten zu beeinträchtigen, für den genannten Zweck zur Verfügung zu stellen.

Demgemäß wurden die eingangs definierten quaternierten Kondensationsprodukte gefunden.

Die zur Herstellung der erfindungsgemäßen kationischen Harze verwendeten Präkondensate können durch Erhitzen der Trialkanolamine I, insbesondere von Triethanolamin oder Triisopropanolamin N[CH₂-CH(CH₃)-OH]₃, in Gegenwart von sauren Katalysatoren, vorzugsweise phosphoriger oder unterphosphoriger Säure, bei Temperaturen von 120 bis 280°C, wie in der EP-A-223 064 beschrieben, erhalten werden. Abweichend vom Verfahren dieser EP-A wird die Reaktion bei dem erfindungsgemäßen Verfahren aber nach Erreichen eines Viskositätsbereiches von 5.000 bis 35.000 mPa.s, vorzugsweise von 10.000 bis 25.000 mPa.s, für Triethanolamin bzw. von 100.000 bis 600.000 mPa.s, vorzugsweise von 200.000 bis 500.000 mPa.s, für Triisopropanolamin oder von 100.000 bis 250.000 mPa.s für ein Mischkondensat aus bevorzugt äquimolaren Mengen Triethanolamin und Triisopropanolamin (jeweils gemessen in unverdünntem Zustand bei 20°C) deutlich unterhalb des Gelpunktes durch Kühlung abgebrochen. Zur weiteren Vernetzung und/oder zum Einbau von Gruppen anderer Polarität an den Ketten, die die Alkohol funktionen tragen, und/oder unter Quaternierung an den zentralen Stickstoffatomen werden die erhaltenen Präkondensate mit einer oder mehreren Verbindungen IIa bis IIe umgesetzt. Die Menge dieser Verbindungen liegt im Bereich von 0,01 bis 0,30 mol, vorzugsweise von 0,01 bis 0,15 mol, pro Grammatom Amin-Stickstoff in I.

Als Verbindungen IIa bis IIe kommen in Betracht:
a) die definitionsgemäßen Carbonsäuren oder deren Derivate IIa, wobei die Reste R⁴ und R⁵ Hydroxylgruppen, C₁-C₈-Alkoxygruppen, vorzugsweise C₁-C₄-Alkoxygruppen, Chlor oder Brom bedeuten und für das Brückenglied R⁶ insbesondere die Gruppierungen
   -(CH₂)_{q}- und 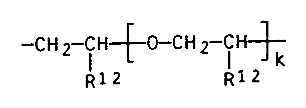 in Betracht kommen, wobei q Werte von 1 bis 50, vorzugsweise 2 bis 10, und k Werte von 0 bis 24, vorzugsweise 0 bis 12, annehmen und R¹² Wasserstoff, Methyl oder Ethyl bedeutet; bevorzugt werden weiterhin unverzweigte Brückenglieder R⁶.
   Als Beispiele für Verbindungen IIa sind zu nennen:
   α) Kohlensäurederivate (n = 0), z.B. Kohlensäuredimethylester, Kohlensäurediethylester, Kohlensäuredipropylester, Kohlensäuredibutylester, Ethylencarbonat, 1,2-Propylencarbonat, 1,3-Propylencarbonat, 1,2-Butylencarbonat, 1,3-Butylencarbonat, 2,3-Butylencarbonat, Phosgen, Chlor- oder Bromkohlensäuremonomethylester und Chlor- oder Bromkohlensäuremonoethylester. Bevorzugt werden cyclische Carbonate, darunter vor allem Ethylencarbonat und 1,3-Propylencarbonat;
   β) Dicarbonsäuren (n = 1, R⁴=R⁵ = OH), z.B. Malonsäure, Bernsteinsäure, Glutarsäure, Adipinsäure, Pimelinsäure, Korksäure, Azelainsäure und Sebacinsäure;
   γ) Dicarbonsäurederivate (n = 1; R⁴,R⁵ = Alkoxy, Cl, Br); als Beispiele können hier die Dimethyl-, Diethyl-, Dipropyl- und Dibutylester sowie die Chloride und Bromide der unter ß) aufgeführten Dicarbonsäuren dienen;
b) die definitionsgemäßen Carbonsäureamide IIb, für die als Beispiele zu nennen sind:
   α) Monocarbonsäureamide (n = r = 0), z.B. Formamid, Acetamid, Propionsäureamid, Buttersäureamid, Benzamid sowie die N-Methyl-, N-Ethyl-, N-Propyl- und N-Butyl-Derivate dieser Amide;
   β) Dicarbonsäureamide (m = 0, n = r = 1), z.B. Malonsäurediamid, Bernsteinsäurediamid, Glutarsäurediamid, Adipinsäurediamid, Pimelinsäurediamid, Korksäurediamid, Azelainsäurediamid, Sebacinsäurediamid sowie die N,N′-Dimethyl-, N,N′-Diethyl-, N,N′-Dipropyl- und N,N′-Dibutyl-Derivate dieser Diamide;
   γ) Harnstoffe (n = 0, r = 1), z.B. Harnstoff, N-Methylharnstoff, N-Ethylharnstoff, N-Propylharnstoff, N-Butylharnstoff, N,N′-Dimethylharnstoff, N,N′-Diethylharnstoff, N,N′-Dipropylharnstoff, N,N′-Dibutylharnstoff, N-(2-Ethylhexyl)harnstoff, N-iso-Nonylharnstoff, N-iso-Tridecylharnstoff, N-Laurylharnstoff, N-Myristylharnstoff, N-Palmitylharnstoff, N-Stearylharnstoff, N-Oleylharnstoff, N-Linolylharnstoff, N-Linolenylharnstoff und N-Phenylharnstoff. Bevorzugt werden monosubstituierte Harnstoffe, und vor allem unsubstituierter Harnstoff;
   δ) Bisharnstoffe (m = n = r = 1), z.B. Methylendiharnstoff, Ethylen-1,2-diharnstoff, Propylen-1,3-diharnstoff, Butylen-1,4-diharnstoff, Pentamethylen-1,5-diharnstoff, Hexamethylen-1,6-diharnstoff, Di(2-ureidoethyl)ether, Di(3-ureidopropyl)ether, Ethylenglykol-bis(2-ureidoethyl)ether, Ethylenglykol-bis(3-ureidopropyl)ether, Diethylenglykol-bis(2-ureidoethyl)ether, Triethylenglykol-bis(2-ureidoethyl)ether und Tetraethylenglykol-bis(2-ureidoethyl)ether. Bevorzugt werden Bisharnstoffe mit einer Alkylenbrücke R⁶ mit 4 bis 10 C-Atomen und besonders bevorzugt wird Hexamethylen-1,6-diharnstoff;
c) ein Epihalogenhydrin IIc, in der X Chlor oder Brom bedeutet. Bevorzugt wird Epichlorhydrin;
d) die definitionsgemäßen monofunktionellen Verbindungen IId, für die als Beispiele zu nennen sind:
   α) Isocyanate, z.B. Methylisocyanat, Ethylisocyanat, Propylisocyanat, Butylisocyanat, 2-Ethylhexylisocyanat, iso-Nonylisocyanat, iso-Tridecylisocyanat, Laurylisocyanat, Myristylisocyanat, Palmitylisocyanat, Stearylisocyanat, Oleylisocyanat, Linolylisocyanat, Linolenylisocyanat, Phenylisocyanat, o-, m- oder p-Chlorphenylisocyanat und o-, m- oder p-Tolylisocyanat;
   β) Urethane, z.B. Carbaminsäuremethylester, Carbaminsäureethylester, Carbaminsäurepropylester, Carbaminsäurebutylester sowie die N-Methyl-, N-Ethyl-, N-Propyl- und N-Butyl-Derivate dieser Verbindungen;
   γ) Glycidylether, z.B. Methylglycidylether, Ethylglycidylether, Propylglycidylether, Butylglycidylether, (2-Ethylhexyl)glycidylether, iso-Nonylglycidylether, iso-Decylglycidylether, iso-Tridecylglycidylether, Laurylglycidylether, Myristylglycidylether, Palmitylglycidylether, Stearylglycidylether, Oleylglycidylether, Linolylglycidylether, Linolenylglycidylether, Cyclohexylglycidylether, Glycidylether aus C₁₃-C₁₅-Oxoalkohol, C₁₂-C₁₄-Fettalkohol sowie C₁₆-C₁₈-Fettalkohol und Phenylglycidylether;
e) die definitionsgemäßen bifunktionellen Verbindungen IIe, in der R¹⁰ eine Alkylengruppe mit 1 bis 50 C-Atomen, vorzugsweise mit 2 bis 26 C-Atomen, die durch ein oder mehrere nicht benachbarte Sauerstoffatome unterbrochen sein und/oder eine oder mehrere nicht vicinal zueinander stehende Hydroxylgruppen enthalten kann, bedeutet. Für das Brückenglied R¹⁰ kommen insbesondere die Gruppierungen
   -(CH₂)_{q}- und 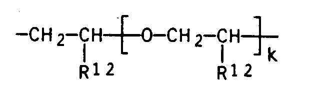 in Betracht, wobei q Werte von 1 bis 50, vorzugsweise 2 bis 10, und k Werte von 0 bis 24, vorzugsweise 0 bis 12, annehmen und R¹² Wasserstoff, Methyl oder Ethyl bedeutet; bevorzugt werden weiterhin unverzweigte Brückenglieder R¹⁰.

Als Beispiele für Verbindungen IIe sind zu nennen:
α) Dichloride oder Dibromide, z.B. Methylenchlorid, 1,2-Dichlorethan, 1,3-Dichlorpropan, 1,4-Dichlorbutan, 1,5-Dichlorpentan, 1,6-Dichlorhexan, Di[2-chlorethyl]ether, Di[3-chlorpropyl]ether, Ethylenglykol-bis[2-chlorethyl]ether, Ethylenglykol-bis[3-chlorpropyl]ether, Diethylenglykol-bis[2-chlorethyl]ether, Triethylenglykol-bis[2-chlorethyl]ether, 1,3-Dichlor-2-propanol, Di[3-chlor-2-hydroxypropyl]ether, Ethylenglykol-bis[3-chlor-2-hydroxypropyl]ether, Diethylenglykol-bis[3-chlor-2-hydroxypropyl]ether und Triethylenglykol-bis[3-chlor-2-hydroxypropyl]ether, Neopentylen-bis[3-chlor-2-hydroxypropyl]ether oder die entsprechenden Bromverbindungen;
β) Diisocyanate, z.B. Ethylen-1,2-diisocyanat, Propylen-1,3-diisocyanat, Butylen-1,4-diisocyanat, Pentamethylen-1,5-diisocyanat, Hexamethylen-1,6-diisocyanat, Di(2-isocyanatoethyl)ether, Di(3-isocyanatopropyl)ether, Ethylenglykol-bis(2-isocyanatoethyl)ether, Ethylenglykol-bis(3-isocyanatopropyl)ether, Diethylenglykol-bis(2-isocyanatoethyl)ether, Triethylenglykolbis(2-isocyanatoethyl)ether und Tetraethylenglykol-bis(2-isocyanatoethyl)ether;
γ) Bisurethane, z.B. die Dimethylester, Diethylester, Dipropylester und Dibutylester von Ethylen-1,2-dicarbaminsäure, Propylen-1,3-dicarbaminsäure, Butylen-1,4-dicarbaminsäure, Pentamethylen-1,5-dicarbaminsäure, Hexamethylen-1,6-dicarbaminsäure, Di[2-(carboxyamino)ethyl]ether, Di[3-(carboxyamino)propyl]ether, Ethylenglykol-bis[2-(carboxyamino)ethyl]ether, Ethylenglykol-bis[3-(carboxyamino)propyl]ether, Diethylenglykolbis[2-(carboxyamino)ethyl]ether, Triethylenglykol-bis[2-(carboxyamino)ethyl]ether und Tetraethylenglykol-bis[2-(carboxyamino)ethyl]ether;
δ) Bisglycidylether, z.B. Ethylenglykol-bisglycidylether, Propan-1,3-diol-bisglycidylether, Butan-1,4-diol-bisglycidylether, Pentan-1,5-diol-bisglycidylether, Hexan-1,6-diol-bisglycidylether, Diethylenglykol-bisglycidylether, Di[3-(glycidyloxy)propyl]ether, Triethylenglykol-bisglycidylether, Ethylenglykol-bis[3-(glycidyloxy)-propyl]ether, Tetraethylenglykol-bisglycidylether, Pentaethylenglykol-bisglycidylether, Hexaethylenglykol-bisglycidylether und Neopentylenglykol-bis-glycidylether;
ε) γ-Alkoxy- oder γ-Aryloxypropylenhalogenhydride, z.B. [3-Chlor-2-hydroxypropyl]-methylether, [3-Chlor-2-hydroxypropyl]-ethylether, [3-Chlor-2-hydroxypropyl]-propylether, [3-Chlor-2-hydroxylpropyl]-butylether, [3-Chlor-2-hydroxypropyl]-2-ethylhexylether, [3-Chlor-2-hydroxypropyl]-isononylether, [3-Chlor-2-hydroxypropyl]-isotridecylether, [3-Chlor-2-hydroxypropyl]-laurylether, [3-Chlor-2-hydroxypropyl]-myristylether, [3-Chlor-2-hydroxypropyl]-palmitylether, [3-Chlor-2-hydroxylpropyl]-stearylether, [3-Chlor-2-hydroxypropyl]-oleylether, [3-Chlor-2-hydroxypropyl]-linolylether, [3-Chlor-2-hydroxypropyl]-linolenylether und [3-Chlor-2-hydroxypropyl]-phenylether oder die ensprechenden Bromverbindungen.

Die Umsetzung des Präkondensats aus Triethanolamin erfolgt vorzugsweise mit einem Harnstoff IIb (n = 0, r = 1), einem Bisharnstoff IIb (m = n = r = 1) oder einem cyclischen Carbonat IIa (R⁴-R⁵=O-Alkylen-O, n = 0) bei Temperaturen von 100 bis 210°C, vorzugsweise 140 bis 200°C, ohne Lösungsmittel bis zu einer Viskosität von 20.000 bis 300.000 mPa.s, vorzugsweise 28.000 bis 150.000 mPa.s, und mit einem Epihalogenhydrin IIc ohne Verwendung eines Lösungsmittels bei Temperaturen von 40 bis 150°C, vorzugsweise 60 bis 130°C, oder in mindestens 40 vol.-%iger wäßriger gegebenenfalls auch wäßrig-alkoholischer Lösung bei Temperaturen von 40 bis 100°C bis zu einer Viskosität einer 80 gew.-%igen wäßrigen Lösung bei 20°C von 12.000 bis 40.000 mPa.s, vorzugsweise 15.000 bis 36.000 mPa.s.

Die Umsetzung des Präkondensats aus Triisopropanolamin erfolgt vorzugsweise mit einem Harnstoff IIb (n = 0, r = 1), einem Bisharnstoff IIb (m = n = r = 1) oder einem cyclischen Carbonat IIa (R⁴-R⁵=O-Alkylen-O, n = 0) bei Temperaturen von 100 bis 210°C, vorzugsweise 140 bis 200°C, ohne Lösungsmittel bis zu einer Viskosität von mehr als 500.000 mPa.s und mit einem Epihalogenhydrin IIc ohne Verwendung eines Lösungsmittels bei Temperaturen von 40 bis 150°C, vorzugsweise 60 bis 130°C, oder in mindestens 40 vol.-%iger wäßriger gegebenenfalls auch wäßrig alkoholischer Lösung bei Temperaturen von 40 bis 100°C.

Die Umsetzung eines Präkondensats aus einem Gemisch von Triethanolamin und Triisopropanolamin, vorzugsweise im molaren Verhältnis 1:1, erfolgt beispielsweise mit einem Harnstoff IIb (n = 0, r = 1), einem Bisharnstoff IIb (m = n = r = 1) oder einem cyclischen Carbonat IIa (R⁴-R⁵ = O-Alkylen-O, n =0) bei Temperaturen von 100 bis 210°C, vorzugsweise 140 bis 200°C, ohne Lösungsmittel bis zu einer Viskosität von mehr als 300.000 mPa.s.

Die Umsetzungsprodukte aus den Polyaminoether-Präkondensaten und den Verbindungen IIa bis IIe werden sodann mit 0,25 bis 1,0 mol, vorzugsweise 0,60 bis 0,95 mol pro Grammatom Amin-Stickstoff in I, eines oder mehrerer der definitionsgemäßen Benzylhalogenide III umgesetzt.

Bevorzugt werden in p-Stellung monosubstituierte Benzylchloride (X = Cl, p = 1), besonders bevorzugt wird unsubstituiertes Benzylchlorid (X = Cl, p = 0).

Die Reaktion des Benzylhalogenids erfolgt vornehmlich am zentralen Stickstoffatom der Kondensationsprodukte aus den Polyaminoethern und den Verbindungen IIa bis IIe unter Quaternierung.

Die Umsetzung mit dem Benzylhalogenid wird vorzugsweise in wäßrigem gegebenenfalls auch in wäßrig-alkoholischem Medium bei Temperaturen von 60 bis 100°C durchgeführt, kann aber auch bei höheren Temperaturen unter Verkürzung der Reaktionszeit vorgenommen werden, wobei dann jedoch unter Druck gearbeitet werden muß. Die wäßrigen bzw. wäßrig-alkoholischen Lösungen der quaternierten Produkte können, gegebenenfalls mit einem Zusatz von Diethylenglykol, direkt für die erfindungsgemäße Verwendung im Textilbereich eingesetzt werden.

Die erfindungsgemäßen Kondensationsprodukte können als Nachbehandlungsmittel für die Fixierung von Färbungen und Drucken auf Cellulosefasern enthaltenden textilen Materialien, die mit Direktfarbstoffen oder bevorzugt Reaktivfarbstoffen gefärbt oder bedruckt worden sind, verwendet werden.

Die Cellulosefasern enthaltenden textilen Materialien können in Form von Fasern, Garnen, Geweben oder anderen Stückwaren vorliegen. Bei den Cellulosefasern handelt es sich vorzugsweise um Baumwolle, Leinen oder Zellwolle. Die textilen Materialien, die erfindungsgemäß nachbehandelt werden, können allein aus Cellulosefasern bestehen oder Cellulosefasern in Mischungen mit synthetischen Fasern wie Polyamid-, Polyacrylnitril- oder Polyesterfasern enthalten.

Die Ware wird mit den handelsüblichen Reaktiv- oder Direktfarbstoffen in bekannter Weise gefärbt oder bedruckt. Beispielsweise färbt man mit Reaktivfarbstoffen bei 20 bis 100°C nach den Ausziehverfahren oder bei Raumtemperatur nach dem Kaltverweilverfahren; nach dem Färben wird das textile Material gut mit Wasser gespült, zweckmäßigerweise zunächst mindestens einmal mit kaltem Wasser und anschließend mindestens einmal mit Wasser einer Temperatur von 70 bis 100°C.

Die Nachbehandlung der gefärbten oder bedruckten Cellulosefasermaterialien, die gegebenenfalls in Mischungen mit anderen Fasersorten vorliegen können, erfolgt vorzugsweise mit einer wäßrigen Flotte der quaternierten Kondensationsprodukte diskontinuierlich oder kontinuierlich nach den üblichen Techniken der Applikation von Nachbehandlungsmitteln. Die diskontinuierliche Nachbehandlung der gefärbten oder bedruckten Materialien mit den wäßrigen Flotten dauert im allgemeinen 5 bis 30 Minuten. Die Konzentration der wasserlöslichen quaternierten Harze in der Nachbehandlungsflotte beträgt vorzugsweise 0,1 bis 5,0 g/l, besonders bevorzugt sind 0,25 bis 2,0 g/l. Das Flottenverhältnis (Verhältnis von trockenem Textilgut in kg zu wäßriger Flotte in l) liegt im Bereich von 1:5 bis 1:50, vorzugsweise 1:10 bis 1:20. Die Nachbehandlungsflotte hat vorzugsweise einen pH-Wert im Bereich von 4 bis 11, besonders bevorzugt ist 5 bis 8. Die quaternierten Harze können jedoch auch auf die Ware, die nachbehandelt werden soll, aufgeklotzt werden. Beim Klotzen verwendet man im allgemeinen wäßrige Lösungen des quaternierten Harzes in einer Konzentration von 1,0 bis 50 g/l, vorzugsweise 2,5 bis 15 g/l.

Die erfindungsgemäße Nachbehandlung wird üblicherweise im Temperaturbereich von 5 bis 100°C vorgenommen und erfolgt in einer dem Ausziehverfahren analogen Verfahrensweise vorzugsweise bei Temperaturen von 40 bis 70°C. Man kann auch so vorgehen, daß das gefärbte oder bedruckte textile Material zuerst mit kaltem und heißem Wasser ausgespült, dann mit der wäßrigen Lösung des quaternierten Harzes nahe Siedetemperatur im Bereich von 70 bis 100°C behandelt und anschließend mit Wasser gespült wird. Im Anschluß an die erfindungsgemäße Nachbehandlung kann das Cellulosefasern enthaltende textile Material gespült werden. Danach wird es getrocknet.

Das Nachbehandlungsverfahren mit den erfindungsgemäß hergestellten quaternisierten Kondensationsprodukten führt zu hohen Naßechtheiten der erhaltenen Färbungen und Drucke. Vor allem bei der schweren Wasserechtheit, der Schweißechtheit und beim Tropentest erzielt man hervorragende Ergebnisse. Die Lichtechtheiten sind, verglichen mit einer Färbung, die nicht erfindungsgemäß nachbehandelt worden ist, nicht verschlechtert, im Gegensatz zu den üblichen Nachbehandlungsmittel, die oft eine Verschlechterung der Lichtechtheiten bewirken. Die Reibechtheiten werden beim erfindungsgemäßen Nachbehandlungsverfahren ebenfalls nicht beeinträchtigt, in einigen Fällen werden sie sogar etwas verbessert.

Weitere Vorteile des erfindungsgemäßen Nachbehandlungsverfahrens sind das Nichtauftreten von Ausfällungen, die sich oft beim Zusammentreffen von Hilfsmitteln mit aus dem Textilgut herausgewaschenen hydrolysierten Reaktivfarbstoffanteilen ergeben, sowie das Ausbleiben von Aufhellungen der Färbungen oder Drucke, so daß auch bei Kombinationsfärbungen keine Farbtonverschiebungen resultieren.

### Beispiele

Die in den Synthese- und Anwendungsbeispielen verwendeten Prozentangaben beziehen sich auf das Gewicht, wenn nicht anders angegeben. Die Angaben in mol-% beziehen sich auf Mol den entsprechenden Verbindung pro 100 Grammatom Amin - Stickstoff im Amin-Präkondensat. Die Viskositäten wurden in einem Rotationsviskosimeter (Haake, Rotavisco) bei 20°C gemessen.

### Synthesebeispiele

### Synthesebeispiel 1

1788 g Triethanolamin und 12 g unterphosphorige Säure (50 %ige wäßrige Lösung) wurden unter Rühren und Durchleiten eines schwachen Stickstoffstroms auf 225 bis 230°C erwärmt. Das bei der Reaktion gebildete Wasser wurde abdestilliert. Nach 7 bis 8 Stunden wurde die Kondensation bei einer Viskosität von 21.000 mPa.s durch Kühlung auf Raumtemperatur abgebrochen. Es wurden 1492 g Triethanolamin-Kondensat erhalten (Aminzahl: 7,69 mmol/g).

130 g dieses Triethanolaminpolyethers wurden mit 3,0 g Harnstoff (entsprechend 5 mol-%) unter Rühren und Stickstoff auf 170 bis 180°C erwärmt und bis zur Beendigung der Ammoniakentwicklung 6 Stunden bei dieser Temperatur gehalten. Das so erhaltene Urethan (Viskosität 41.000 bis 45.000 mPa.s) wurde mit 100 g Wasser verdünnt und auf 70°C erwärmt. Anschließend wurden 101 g Benzylchlorid (entsprechend 80 mol-%) innerhalb von 2 Stunden zugetropft. Danach wurde 3 Stunden bei 80°C gerührt und mit 133 g Wasser auf einen Gehalt von 50 % kationischer Verbindung eingestellt.

Analog zu Synthesebeispiel 1 wurden die in Tabelle 1 aufgeführten quaternierten Verbindungen hergestellt.

**Tabelle 1**

| Quaternierte Kondensationsprodukte mit Harnstoff | | | | |
|---|---|---|---|---|
| Synthesebeispiel Nr. | Triethanolamin-Präkondensat Viskosität [mPa.s] | Umsetzung mit Harnstoff | | Quaternierungsmittel (mol-%) |
| | | mol-% | Viskosität [mPa.s] | |
| 2 | 25.000 | 5 | 65.400 | Benzylchlorid (80) |
| 3 | 10.000 | 10 | 35.000 | Benzylchlorid (80) |
| 4 | 10.000 | 15 | 65.000 | Benzylchlorid (80) |
| 5 | 20.000 | 5 | 39.000 | Benzylchlorid (90) |
| 6 | 21.000 | 5 | 42.000 | 4-Chlorbenzylchlorid (80) |
| 7 | 21.000 | 5 | 42.000 | 4-Methylbenzylchlorid (80) |

### Synthesebeispiel 8

260 g eines Triethanolamin-Präkondensats (Aminzahl: 7,69 mmol/g) der Viskosität 19.900, hergestellt wie in Synthesebeispiel 1, und 10,1 g Hexamethylen-1,6-diharnstoff (entsprechend 2,5 mol-%) wurden unter Stickstoff 2 Stunden bei 160°C und danach 4 Stunden bei 180°C bis zur Beendigung der Ammoniakentwicklung gerührt. Die Viskosität des resultierenden Gemisches betrug 63.000 mPa.s. Nach Verdünnung mit 200 g Wasser wurden bei 60 bis 70°C innerhalb von 2 Stunden 203 g Benzylchlorid (entsprechend 80 mol-%) zugetropft. Anschließend wurde 3 Stunden bei 80°C gerührt und mit 268 g Wasser verdünnt.

### Synthesebeispiel 9

131,2 g eines Triethanolamin-Präkondensats (Aminzahl: 7,62 mmol/g) der Viskosität 20.400 mPa.s, hergestellt wie in Synthesebeispiel 1, und 36,3 g iso-Tridecylharnstoff (entsprechend 15 mol-%) wurden unter Stickstoff 1,5 Stunden bei 165°C und anschließend 5 Stunden bei 180°C bis zur Beendigung der Ammoniakentwicklung gerührt. Die Viskosität des Umsetzungsproduktes betrug 34.800 mPa.s. Nach Verdünnung mit 100 g Wasser wurden bei 70°C innerhalb von 1,5 Stunden 101 g Benzylchlorid (entsprechend 80 mol-%) zugetropft. Nach dreistündigem Rühren bei 85°C wurde durch Zugabe von 158 g Diethylenglykol eine klare Lösung hergestellt.

### Synthesebeispiel 10

670,5 g Triethanolamin und 860,7 g Triisopropanolamin (jeweils 4,5 mol) wurden zusammen mit 9,0 g unterphosphoriger Säure (50 %ige wäßrige Lösung) unter Durchleiten eines schwachen Stickstoffstroms bei 220°C gerührt. Das bei der Reaktion gebildete Wasser wurde abdestilliert. Nach 7 bis 8 Stunden wurde die Kondensation bei einer Viskosität von 174.600 mPa.s durch Kühlung auf Raumtemperatur abgebrochen. Man erhielt 1332 g Mischkondensat (Aminzahl: 6,46 mmol/g).

309,6 g dieses Mischkondensats wurden mit 6,0 g Harnstoff (entsprechend 5 mol-%) unter Rühren und Stickstoff auf 170 bis 180°C erwärmt und bis zur Beendigung der Ammoniakentwicklung 5 Stunden bei dieser Temperatur gehalten. Das Umsetzungsprodukt (Viskosität 383.000 mPa.s) wurde mit 200 g Wasser verdünnt und auf 70°C erwärmt. Danach wurden 203 g Benzylchlorid (entsprechend 80 mol-%) innerhalb von 2 Stunden zugetropft. Anschließend wurde 5 Stunden bei 100°C gerührt und durch Zugabe von 318 g Diethylenglykol eine klare Lösung hergstellt.

### Synthesebeispiel 11

1530 g Triisopropanolamin und 8,0 g unterphosphorige Säure (50 %ige wäßrige Lösung) wurden analog den Synthesebeispielen 1 und 10 unter Rühren und Durchleiten eines schwachen Stickstoffstroms auf 200 bis 225°C erwärmt. Das bei der Reaktion gebildete Wasser wurde abdestilliert. Die Kondensation wurde bei einer Viskosität von 390.000 mPa.s durch Kühlung auf Raumtemperatur abgebrochen.

359,6 g dieses Triisopropanolamin-Präkondensats (Aminzahl: 5,56 mmol/g) wurden mit 6,0 g Harnstoff (entsprechend 5 mol-%) unter Rühren und Stickstoff auf 170 bis 180°C erwärmt und bis zur Beendigung der Ammoniakentwicklung 5 Stunden bei dieser Temperatur gehalten. Beim Abkühlen auf Raumtemperatur wurde das Umsetzungsprodukt fest. Es wurde in einer Mischung aus 210 g Waser und 85 g Isobutanol bei 70°C gelöst und bei dieser Temperatur innerhalb von 2 Stunden mit 208 g Benzylchlorid (entsprechend 82 mol-%) versetzt. Anschließend wurde 13 Stunden unter Rückfluß erhitzt. Danach wurde das Isobutanol abdestilliert und die dem Destillat entsprechende Gewichtsmenge Wasser zugegeben. Durch Zusatz von 270 g Diethylenglykol wurde eine klare Lösung hergestellt.

### Synthesebeispiel 12

Zu 128,4 g eines Triethanolamin-Präkondensats (Aminzahl: 7,79 mmol/g) der Viskosität 15.000 mPa.s, hergestellt wie in Synthesebeispiel 1, und 32 g Wasser (Viskosität der resultierenden Lösung 2.800 mPa.s) wurden 5,6 g Epichlorhydrin (entsprechend 6 mol-%) getropft. Die Lösung wurde auf 70°C erwärmt. Der pH-Wert wurde durch Zugabe von insgesamt 5,0 g konz. Salzsäure bei 9 gehalten. Innerhalb von 8 Stunden stieg die Viskosität der Lösung auf 15.000 bis 16.000 mPa.s an. Nach Zugabe von 76,8 g Wasser wurden bei 70°C 76 g Benzylchlorid (entsprechend 60 mol-%) zugetropft. Man ließ 3 Stunden bei 80°C rühren und verdünnte mit 100 g Wasser.

Analog zu Synthesebeispiel 12 wurden die in Tabelle 2 aufgeführten quaternierten Verbindungen hergestellt.

**Quaternierte Kondensationsprodukte mit Epichlorhydrin**

| Synthesebeispiel Nr. | Triethanolamin-Präkondensat Viskosität unverdünnt [mPa.s] | Umsetzung mit Epichlorhydrin | | Quaterniungsmittel (mol-%) |
|---|---|---|---|---|
| | | mol-% | Viskosität verdünnt [mPa.s] | |
| 13 | 10.000 | 10 | 17.900 | Benzylchlorid (75) |
| 14 | 20.000 | 5 | 35.700 | Benzylchlorid (75) |
| 15 | 33.000 | 1,9 | 16.000 | Benzylchlorid (75) |
| 16 | 20.400 | 3,4 | 15.400 | 4-Methyoxybenzylchlorid (70) |

### Synthesebeispiel 17

129,5 g eines Triethanolamin-Präkondensats (Aminzahl: 7,72 mmol/g) der Viskosität 23.500 mPa.s, hergestellt wie in Synthesebeispiel 1, und 4,6 g Epichlorhydrin (entsprechend 5 mol-%) wurden auf 100 bis 105°C erwärmt und bei dieser Temperatur 5 Stunden gerührt. Die Viskosität der auf 20°C abgekühlten Schmelze betrug 65.400 mPa.s. Nach Zugabe von 80 g Wasser wurde bei 70 bis 80°C mit 85,3 g Benzylchlorid (entsprechend 67 mol-%) umgesetzt.

### Synthesebeispiel 18

129,5 g eines Triethanolamin-Präkondensats (Aminzahl: 7,72 mmol/g) der Viskosität 23.600 mPa.s, hergestellt wie in Synthesebeispiel 1, und 5,1 g 1,3-Propylencarbonat (entsprechend 5 mol-%) wurden 2,5 Stunden bei 150°C und anschließend 2,5 Stunden bei 180°C unter Durchleiten eines schwachen Stickstoffstroms gerührt. Die Viskosität betrug danach 28.300 bis 29.500 mPa.s. Nach Zugabe von 80 g Wasser wurden bei 70°C 91 g Benzylchlorid (entsprechend 72 mol-%) langsam zugetropft. Anschließend wurde 3 Stunden bei 80°C gerührt.

Die Darstellung eines quaternierten Kondensationsproduktes mit Ethylencarbonat kann analog der Umsetzung mit 1,3-Propylencarbonat erfolgen.

### Anwendungsbeispiele

Die Anwendung der erfindungsgemäßen quaternierten Kondensationsprodukte als Nachbehandlungsmittel wurde an gebleichter, mercerisierter und mit Reaktivfarbstoffen gefärbter Baumwoll-Nessel getestet.

Allgemeines Färbeverfahren I (für Reaktivfarbstoffe mittlerer Reaktivität): das Baumwollmaterial wurde bei 25°C in das Färbebad bei einem Flottenverhältnis von 1:10 eingebracht, das die in den Anwendungsbeispielen genannten Farbstoffe in handelsüblicher Form, 60 g/l Natriumsulfat, 2,0 ml/l Natronlauge von 38° Be, 5,0 g/l Soda und 1,0 g/l Natrium-m-nitrobenzolsulfonat zur Verhinderung einer unerwünschten Reduktion des Farbstoffs enthielt. Nach einer Verweildauer von 15 Min. bei 25°C wurde innerhalb von 30 Min. auf 80°C aufgeheizt und 60 Min. bei 80°C gefärbt. Nach dem Färbevorgang wurde das Material 10 Min. mit kaltem Wasser im Flottenverhältnis 1:20 gespült, die Spülflotte abgelassen und das Material dann 10 Min. mit Wasser bei 98°C behandelt.

Allgemeines Färbeverfahren II (für Reaktivfarbstoffe hoher Reaktivität): das Baumwollmaterial wurde bei 15 bis 17°C in das Färbebad bei einem Flottenverhältnis von 1:10 eingebracht, das die in den Anwendungsbeispielen genannten Farbstoffe in handelsüblicher Form, 60 g/l Natriumsulfat und 15 g/l Soda enthielt. Nach einer Verweildauer von 10 Min. wurde innerhalb von 15 Min. auf 30°C aufgeheizt und 60 Min. bei 30°C gefärbt. Nach dem Färbevorgang wurde analog Allgemeinem Färbeverfahren I kalt und heiß gespült.

Es kamen folgende Tests zur Beurteilung der Echtheiten der Färbungen in Betracht:
- Lichtechtheit nach Xenotest-Belichtung (DIN 54 004)
- alkalische und saure Schweißechtheit (DIN 54 020)
- Trocken- und Naßreibechtheit (DIN 54 021)
- schwere Wasserechtheit (DIN 54 006)
- Tropentest (Lagerung im Sattdampf bei 80°C für 72 Stunden).

Beim Tropentest ("Bügeltest") wird das gefärbte Material nach der Lagerung im Sattdampf zwischen zwei weiße Baumwollgewebe gelegt, dieses "Sandwich" gut in Wasser genetzt und anschließend zweimal je 30 Sekunden bei 180°C in der Bügelmaschine gepreßt und bei laufender Maschine getrocknet. Durch diese Behandlung wandern die nicht fixierten Farbstoffe oder die durch die thermische Behandlung hydrolysierten Farbstoffe vom gefärbten auf das weiße Material. Der Tropentest simuliert eine sechsmonatige Lagerung der Reaktivfärbungen bei Raumtemperatur. Diese Prüfmethode ist sehr empfindlich und strenger als die schwere Wasserechtheit nach DIN 54 006. Die Benotungsskala reicht von 0 bis 10, wobei die Note 10 die beste Bewertung darstellt.

### Anwendungsbeispiel 1

Gebleichter und mercerisierter Baumwoll-Nessel wurde mit 0,8 % des Farbstoffs C.I. Reactive Blue 41 nach Vorschrift I gefärbt. Im Anschluß daran wurde 15 Min. bei 50°C mit einer wäßrigen Lösung behandelt, die bezogen auf das trockene Textilgut 1,0 % des quaternierten Harzes aus Synthesebeispiel 2 enthielt. Der pH-Wert der Flotte betrug 7,6. Man erhielt eine Färbung, deren Lichtechtheit gegenüber einer Färbung, die auf übliche Weise, also ohne Nachbehandlungsmittel, geseift wurde, nicht beeinträchtigt war. Der Wert für den Tropentest lag bei 10.

### Anwendungsbeispiel 2

Analog zu Anwendungsbeispiel 1 wurde mit 10 % des Farbstoffs C.I. Reactive Blue 41 gefärbt und anschließend nachbehandelt. Der Wert für die schwere Wasserechtheit lag bei 5, eine Vergleichsfärbung ohne Nachbehandlung erbrachte die Note 3-4. Die Reibechtheiten waren im Gegensatz zur Vergleichsfärbung ohne Nachbehandlung nicht verschlechtert.

### Anwendungsbeispiel 3

Zwei Baumwollfärbungen nach Vorschrift I mit 0,25 % und 1,6 % des Farbstoffs C.I. Reactive Brown 32 wurden analog Anwendungsbeispiel 1 nachbehandelt. Zum Vergleich wurden beide Färbungen auch mit einem handelsüblichen polykationischen Fixiermittel nachbehandelt. Die Lichtechtheit der helleren Färbung erhielt die Note 4, die der dunkleren Färbung die Note 5; die Vergleichsfärbungen lagen jeweils um 1,5 Noten niedriger. Der Wert des Tropentests lag jeweils bei 10; die Noten für die Vergleichsfärbungen lagen bei 10 für die hellere bzw. 8 für die dunklere Färbung.

### Anwendungsbeispiel 4

Das gebleichte und mercerisierte Baumwollmaterial wurde mit 2,1 % des Farbstoffes C.I. Reactive Red 204 nach Vorschrift I gefärbt. Im Anschluß daran wurde 15 Min. bei 40°C mit einer wäßrigen Lösung nachbehandelt, die bezogen auf das trockene Textilgut 1,0 % des Harzes aus Synthesebeispiel 14 enthielt. Der pH-Wert der Nachbehandlungsflotte betrug 7,7. Die nachbehandelte Färbung besaß für die schwere Wasserechtheit den Wert 5, die Note des Tropentests lag bei 9-10. Eine Vergleichsfärbung, die nicht nachbehandelt wurde, erhielt für die schwere Wasserechtheit die Note 3-4, für den Tropentest die Note 4-5.

### Anwendungsbeispiel 5

Das gebleichte und mercerisierte Baumwollmaterial wurde mit 5,0 % des Farbstoffes C.I. Reactive Red 120 nach Vorschrift I gefärbt und analog Anwendungsbeispiel 4 mit dem quaternierten Harz aus Synthesebeispiel 18 nachbehandelt. Der Wert für die schwere Wasserechtheit lag bei 5 im Vergleich zur Note 3 der entsprechenden Färbung ohne Nachbehandlung. Der Wert des Tropentests lag bei 9-10 im Vergleich zur Note 4 ohne Nachbehandlung.

### Anwendungsbeispiel 6

Analog zu Anwendungsbeispiel 5 wurde mit 1,8 % des Farbstoffs C.I. Reactive Red 120 gefärbt und mit dem quaternierten Harz aus Synthesebeispiel 18 nachbehandelt. Der Wert der Naßreibechtheit lag bei 2-3, der Wert der nicht behandelten Färbung betrug 2.

### Anwendungsbeispiel 7

Gebleichter und mercerisierter Baumwollnessel wurde mit 5,0 % des Farbstoffes C.I. Reactive Blue 168 nach Vorschrift II gefärbt und anschließend 15 Min. bei 60°C mit einer wäßrigen Lösung nachbehandelt, die bezogen auf das trockene Textilgut 1,0 % des quaternierten Harzes aus Synthesebeispiel 13 enthielt. Der pH-Wert der Nachbehandlungsflotte betrug 7,1. Die so nachbehandelte Färbung erhielt die Note 9-10 für den Tropentest, wohingegen die entsprechende nicht nachbehandelte Färbung die Note 1-2 besaß.

### Anwendungsbeispiel 8

Das gebleichte und mercerisierte Baumwollgewebe wurde mit 1,8 % des Farbstoffes Reactive Red 2 nach Vorschrift II gefärbt und anschließend 15 Min. bei 40°C mit einer wäßrigen Lösung nachbehandelt, die bezogen auf das trockene Textilgut 1,0 % des quaternierten Harzes aus Synthesebeispiel 7 enthielt. Man erhielt eine Färbung, die für die schwere Wasserechtheit den Wert 5 besaß; die entsprechende nicht nachbehandelte Färbung erhielt die Note 4. Der Wert des Tropentests lag bei 9-10, der der Vergleichsfärbung ohne Nachbehandlung bei 7. Der Wert der Naßreibechtheit lag bei 2-3 im Vergleich zur Note 2 der nicht nachbehandelten Färbung.

### Anwendungsbeispiel 9

Gebleichter und mercerisierter Baumwollnessel wurde mit 5,0 % des Farbstoffes Reactive Blue 168 nach Vorschrift II gefärbt und anschließend 10 Min. bei 50°C mit einer wäßrigen Lösung nachbehandelt, die bezogen auf das trockene Textilgut 1,0 % des quaternierten Harzes aus Synthesebeispiel 15 enthielt. Die nachbehandelte Färbung besaß für die schwere Wasserechtheit und die Schweißechtheit jeweils den Wert 5. Die Note für den Tropentest betrug 9-10. Die entsprechende Färbung ohne Nachbehandlung wies für den Tropentest die Note 3 und für die schwere Wasserechtheit und die Schweißechtheit jeweils die Note 3-4 auf.

### Anwendungsbeispiel 10

Gebleichter und mercerisierter Baumwollnessel wurde mit 1,8 % des Farbstoffs C.I. Reactive Red 120 nach Vorschrift I gefärbt und analog Anwendungsbeispiel 7 mit dem quaternierten Harz aus Synthesebeispiel 8 nachbehandelt. Als Vergleich diente eine nicht nachbehandelte Färbung. Die alkalische Schweißechtheit besaß die Note 4-5 im Gegensatz zur Note 3-4 der Vergleichsfärbung. Der Wert der Naßreibechtheit lag bei 2-3, der Wert der Vergleichsfärbung betrug 2.

### Anwendungsbeispiel 11

Gebleichter und mercerisierter Baumwollnessel wurde mit 0,7% und 4,0 % des Farbstoffs C.I. Reactive Yellow 22 nach Vorschrift II gefärbt und anschließend 10 Min. bei 50°C mit einer wäßrigen Lösung, die bezogen auf das trockene Textilgut 1,0 % des quaternierten Harzes aus Synthesebeispiel 8 enthielt, nachbehandelt (a). Als Vergleich dienten die entsprechenden nicht nachbehandelten Färbungen (b) und Färbungen, die mit einem handelsüblichen polykationischen Fixiermittel nachbehandelt worden waren (c). Die Noten der Lichtechtheiten und des Tropentests sind in der folgenden Tabelle angegeben:

| Noten für | Probe (a) | Probe (b) | Probe (c) |
|---|---|---|---|
| 0,7 % Farbstoff | | | |
| Lichtechtheit | 5-6 | 6 | 4-5 |
| Tropentest | 10 | 7 | 9-10 |

| 4,0 % Farbstoff | | | |
|---|---|---|---|
| Lichtechtheit | 6-7 | 7 | 6 |
| Tropentest | 10 | 6 | 9 |

## Patentansprüche (Patentansprüche für folgende(n) Vertragsstaat(en): AT, BE, CH, LI, DE, FR, GB, IT)

1. Quaternierte Kondensationsprodukte aus
A) einem Präkondensat aus einem oder mehreren Trialkanolaminen der allgemeinen Formel I 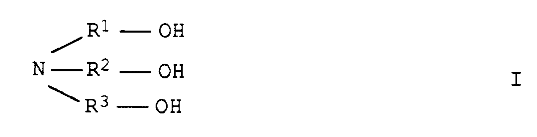 in der die Reste R¹ bis R³ für 1,2-Alkylengruppen mit 2 bis 4 C-Atomen stehen, eines Viskositätsbereiches von 5.000 bis 35.000 mPa.s für Triethanolamin bzw. von 100.000 bis 600.000 mPa.s für Triisopropanolamin oder von 100.000 bis 250.000 mPa.s für ein Mischkondensat aus Triethanolamin und Triisopropanolamin (jeweils gemessen in unverdünntem Zustand bei 20°C) und
B) 0,01 bis 0,30 mol pro Grammatom Amin-Stickstoff in I einer oder mehrerer der folgenden Verbindungen II:
a) einer Carbonsäure oder eines Carbonsäurederivates der allgemeinen Formel IIa 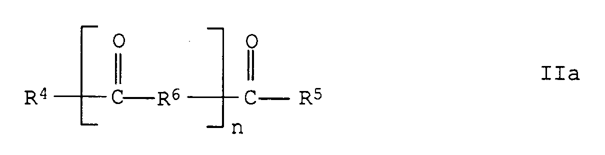 in der
n 0 oder 1
R⁴, R⁵ Hydroxylgruppen, ausgenommen für den Fall n=0, oder C₁-C₈-Alkoxygruppen, die im Falle n=0 zu einem fünf- oder sechsgliedrigen Ring verbunden sein können, oder Chlor oder Brom und
R⁶ eine Alkylengruppe mit 1 bis 50 C-Atomen, die durch ein oder mehrere nicht benachbarte Sauerstoffatome unterbrochen sein kann,
bedeuten,
b) einem Carbonsäureamid der allgemeinen Formel IIb 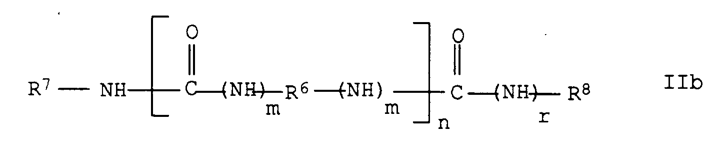 in der
m, n, r 0 oder 1
R⁷ Wasserstoff oder eine C₁-C₄-Alkylgruppe und
R⁸ Wasserstoff, eine C₁-C₂₅-Alkylgruppe, eine C₂-C₂₅-Alkenylgruppe oder einen Phenylrest, der C₁-C₄-Alkylgruppen, C₁-C₄-Alkoxygruppen sowie Fluor, Chlor oder Brom als Substituenten tragen kann,
bedeuten,
c) einem Epihalogenhydrin der allgemeinen Formel IIc 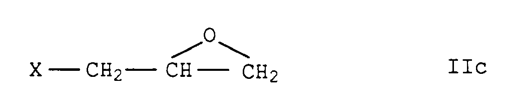 in der
X Chlor oder Brom
bedeutet,
d) einer monofunktionellen Verbindung der allgemeinen Formel IId
R⁹-Y IId
in der
R⁹ eine C₁-C₂₅-Alkylgruppe, eine C₂-C₂₅-Alkenylgruppe oder einen Phenylrest, der C₁-C₄-Alkylgruppen, C₁-C₄-Alkoxygruppen sowie Fluor, Chlor oder Brom als Substituenten tragen kann, und
Y Isocyanat oder eine der Gruppen 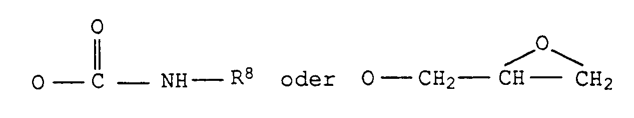
bedeutet,
e) einer bifunktionellen Verbindung der allgemeinen Formel IIe
Z¹―R¹⁰―Z² IIe
in der
R¹⁰ eine Alkylengruppe mit 1 bis 50 C-Atomen, die durch ein oder mehrere nicht benachbarte Sauerstoffatome unterbrochen sein und/oder eine oder mehrere nicht vicinal zueinander stehende Hydroxylgruppen enthalten kann, und
Z¹, Z² Chlor, Brom, Isocyanat oder eine der Gruppen 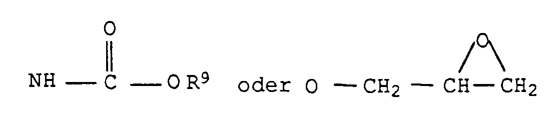
oder OR⁹ bedeutet,
und
C) 0,25 bis 1,0 mol pro Grammatom Amin-Stickstoff in I eines Benzylhalogenids der allgemeinen Formel III 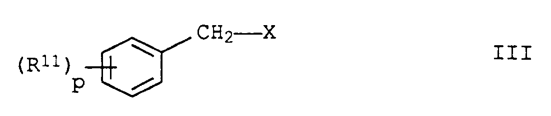 in der
p für 0 bis 2 und
R¹¹ für eine C₁-C₄-Alkylgruppe, eine C₁-C₄-Alkoxygruppe, Fluor, Chlor oder Brom
steht.

2. Quaternierte Kondensationsprodukte nach Anspruch 1, in denen die Reste R¹ bis R³ des eingesetzten Trialkanolamins I jeweils gleich sind und die Bedeutung 1,2-Ethylen oder 1,2-Propylen haben.

3. Quaternierte Kondensationsprodukte nach den Ansprüchen 1 oder 2, in denen die Verbindung II eine der folgenden Substanzen ist:
Harnstoff (II b, R⁷=R⁸=H, n=0, r=1)
Hexamethylen-1,6-diharnstoff (II b, R⁶=(CH₂)₆, R⁷=R⁸=H, m=n=r=1)
Epichlorhydrin (II c, X=Cl)
Ethylencarbonat (II a, R⁴-R⁵=O-CH₂CH₂-O, n=0)
1,3-Propylencarbonat (II a, R⁴-R⁵=O-CH₂CH₂CH₂-O, n=0).

4. Quaternierte Kondensationsprodukte nach den Ansprüchen 1 bis 3, bei denen als Verbindung III Benzylchlorid (X=Cl, p=0) verwendet wird.

5. Verfahren zur Herstellung der quaternierten Kondensationsprodukte gemäß den Ansprüchen 1 bis 4, dadurch gekennzeichnet, daß man ein Präkondensat aus einem oder mehreren Trialkanolaminen I des angegebenen Viskositätsbereiches mit einer oder mehreren Verbindungen IIa bis IIe in einer Menge von 0,01 bis 0,30 mol pro Grammatom Amin-Stickstoff in I und anschließend mit 0,25 bis 1,0 mol pro Grammatom Amin-Stickstoff in I eines Benzylhalogenids III umsetzt.

6. Verwendung der quaternierten Kondensationsprodukte gemäß den Ansprüchen 1 bis 4 als Nachbehandlungsmittel für die Fixierung von Färbungen und Drucken auf Cellulosefasern enthaltenden textilen Materialien, die mit Reaktivfarbstoffen oder Direktfarbstoffen gefärbt oder bedruckt worden sind.

7. Verfahren zur Nachbehandlung für die Fixierung von Färbungen Drucken auf Cellulosefasern enthaltenden textilen Mate- und rialien, dadurch gekennzeichnet, daß man hierzu die quaternierten Kondensationsprodukte gemäß den Ansprüchen 1 bis 4 verwendet.

8. Verfahren nach Anspruch 7, dadurch gekennzeichnet, daß man die gefärbten oder bedruckten textilen Materialien mit einer wäßrigen Lösung, die die quaternierten Kondensationsprodukte gemäß den Ansprüchen 1 bis 4 in einer Menge von 0,05 bis 25 Gew.-%, bezogen auf das trockene Cellulosematerial, enthält, bei Temperaturen von 5 bis 100°C behandelt.

## Patentansprüche (Patentansprüche für folgende(n) Vertragsstaat(en): ES)

1. Verfahren zur Herstellung von quaternierten Kondensationsprodukten, dadurch gekennzeichnet, daß man
A) ein Präkondensat aus einem oder mehreren Trialkanolaminen der allgemeinen Formel I 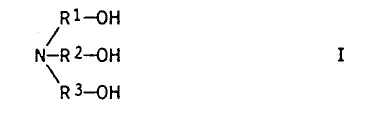 in der die Reste R¹ bis R³ für 1,2-Alkylengruppen mit 2 bis 4 C-Atomen stehen, eines Viskositätsbereiches von 5.000 bis 35.000 mPa.s für Triethanolamin bzw. von 100.000 bis 600.000 mPa.s für Triisopropanolamin oder von 100.000 bis 250.000 mPa.s für ein Mischkondensat aus Triethanolamin und Triisopropanolamin (jeweils gemessen in unverdünntem Zustand bei 20°C), mit
B) 0,01 bis 0,30 mol pro Grammatom Amin-Stickstoff in I einer oder mehrerer der folgenden Verbindungen II:
a) einer Carbonsäure oder eines Carbonsäurederivates der allgemeinen Formel IIa 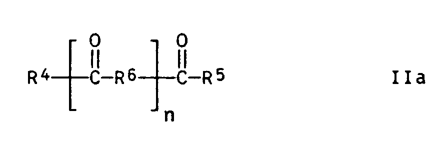 in der
n 0 oder 1
R⁴, R⁵ Hydroxylgruppen, ausgenommen für den Fall n=0, oder C₁-C₈-Alkoxygruppen, die im Falle n=0 zu einem fünf- oder sechsgliedrigen Ring verbunden sein können, oder Chlor oder Brom und
R⁶ eine Alkylengruppe mit 1 bis 50 C-Atomen, die durch ein oder mehrere nicht benachbarte Sauerstoffatome unterbrochen sein kann,
bedeuten,
b) einem Carbonsäureamid der allgemeinen Formel IIb 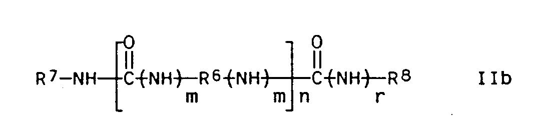 in der
m, n, r 0 oder 1
R⁷ Wasserstoff oder eine C₁-C₄-Alkylgruppe und
R⁸ Wasserstoff, eine C₁-C₂₅-Alkylgruppe, eine C₂-C₂₅-Alkenylgruppe oder einen Phenylrest, der C₁-C₄-Alkylgruppen, C₁-C₄-Alkoxygruppen sowie Fluor, Chlor oder Brom als Substituenten tragen kann,
bedeuten,
c) einem Epihalogenhydrin der allgemeinen Formel IIc 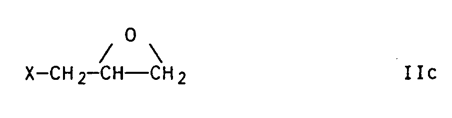 in der
X Chlor oder Brom
bedeutet,
d) einer monofunktionellen Verbindung der allgemeinen Formel IId
R⁹-Y IId
in der
R⁹ eine C₁-C₂₅-Alkylgruppe, eine C₂-C₂₅-Alkenylgruppe oder einen Phenylrest, der C₁-C₄-Alkylgruppen, C₁-C₄-Alkoxygruppen sowie Fluor, Chlor oder Brom als Substituenten tragen kann, und
Y Isocyanat oder eine der Gruppen 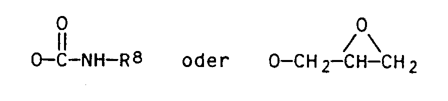
bedeutet,
e) einer bifunktionellen Verbindung der allgemeinen Formel IIe
Z¹-R¹⁰-Z² IIe
in der
R¹⁰ eine Alkylengruppe mit 1 bis 50 C-Atomen, die durch ein oder mehrere nicht benachbarte Sauerstoffatome unterbrochen sein und/oder eine oder mehrere nicht vicinal zueinander stehende Hydroxylgruppen enthalten kann, und
Z¹, Z² Chlor, Brom, Isocyanat oder eine der Gruppen 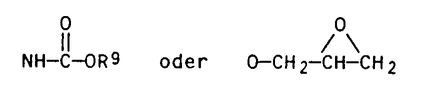
oder OR⁹ bedeutet,
und anschließend mit
C) 0,25 bis 1,0 mol pro Grammatom Amin-Stickstoff in I eines Benzylhalogenids der allgemeinen Formel III 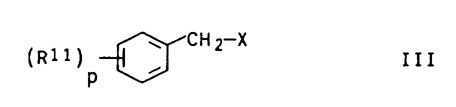 in der
p für 0 bis 2 und
R¹¹ für eine C₁-C₄-Alkylgruppe, eine C₁-C₄-Alkoxygruppe, Fluor, Chlor oder Brom
steht,
umsetzt.

2. Verfahren zur Herstellung von quaternierten Kondensationsprodukten nach Anspruch 1, dadurch gekennzeichnet, daß die Reste R¹ bis R³ des eingesetzten Trialkanolamins I jeweils gleich sind und die Bedeutung 1,2-Ethylen oder 1,2-Propylen haben.

3. Verfahren zur Herstellung von quaternierten Kondensationsprodukten nach den Ansprüchen 1 oder 2, dadurch gekennzeichnet, daß die Verbindung II eine der folgenden Substanzen ist:
Harnstoff (II b, R⁷=R⁸=H, n=0, r=1)
Hexamethylen-1,6-diharnstoff (II b, R⁶=(CH₂)₆, R⁷=R⁸=H, m=n=r=1)
Epichlorhydrin (II c, X=Cl)
Ethylencarbonat (II a, R⁴-R⁵=O-CH₂CH₂-O, n=0)
1,3-Propylencarbonat (II a, R⁴-R⁵=O-CH₂CH₂CH₂-O, n=0).

4. Verfahren zur Herstellung von quaternierten Kondensationsprodukten nach den Ansprüchen 1 bis 3, dadurch gekennzeichnet, daß als Verbindung III Benzylchlorid (X=Cl, p=O) verwendet wird.

5. Verwendung der quaternierten Kondensationsprodukte gemäß den Ansprüchen 1 bis 4 als Nachbehandlungsmittel für die Fixierung von Färbungen und Drucken auf Cellulosefasern enthaltenden textilen Materialien, die mit Reaktivfarbstoffen oder Direktfarbstoffen gefärbt oder bedruckt worden sind.

6. Verfahren zur Nachbehandlung für die Fixierung von Färbungen und Drucken auf Cellulosefasern enthaltenden textilen Materialien, dadurch gekennzeichnet, daß man hierzu die quaternierten Kondensationsprodukte gemäß den Ansprüchen 1 bis 4 verwendet.

7. Verfahren nach Anspruch 6, dadurch gekennzeichnet, daß man die gefärbten oder bedruckten textilen Materialien mit einer wäßrigen Lösung, die die quaternierten Kondensationsprodukte gemäß den Ansprüchen 1 bis 6 in einer Menge von 0,05 bis 25 Gew.-%, bezogen auf das trockene Cellulosematerial enthält, bei Temperaturen von 5 bis 100°C behandelt.

## Claims (Claims for the following Contracting State(s): AT, BE, CH, LI, DE, FR, GB, IT)

1. A quaternized condensation product of
A) a precondensate of one or more trialkanolamines of the general formula I 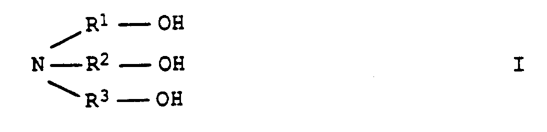 where R¹, R² and R³ are each 1,2-alkylene of from 2 to 4 carbon atoms, having a viscosity range from 5000 to 35,000 mPa.s for triethanolamine or from 100,000 to 600,000 mPa.s for triisopropanolamine or from 100,000 to 250,000 mPa.s for a cocondensate of triethanolamine and triisopropanolamine (in each case measured in the undiluted state at 20°C), and
B) from 0.01 to 0.30 mol per gram atom of amine nitrogen in I of one or more of the following compounds II:
a) a carboxylic acid or carboxylic acid derivative of the general formula IIa 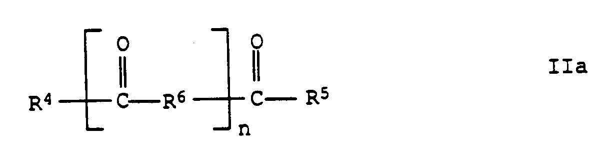 where
n is 0 or 1
R⁴ and R⁵ are each hydroxyl except if n is 0, or C₁-C₈-alkoxy which if n is 0 may be bonded together to form a five- or six-membered ring, or chlorine or bromine, and
R⁶ is alkylene of from 1 to 50 carbon atoms which may be interrupted by one or more nonadjacent oxygen atoms,
b) a carboxamide of the general formula IIb 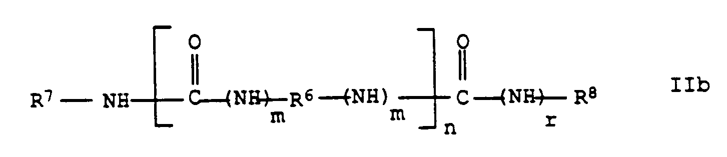 where
m, n, and r are each 0 or 1,
R⁷ is hydrogen or C₁-C₄-alkyl and
R⁸ is hydrogen, C₁-C₂₅-alkyl, C₂-C₂₅-alkenyl, or phenyl which may be substituted by C₁-C₄-alkyl, C₁-C₄-alkoxy, fluorine, chlorine or bromine,
c) an epihalohydrin of the general formula IIc 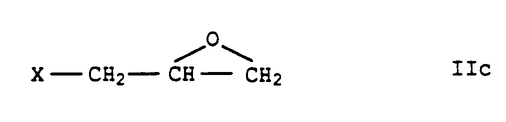 where
X is chlorine or bromine,
d) a monofunctional compound of the general formula IId
R⁹-Y IId
where
R⁹ is C₁-C₂₅-alkyl, C₂-C₂₅-alkenyl, or phenyl which may be substituted by C₁-C₄-alkyl, C₁-C₄-alkoxy, fluorine, chlorine or bromine, and
y is isocyanate or one of the groups 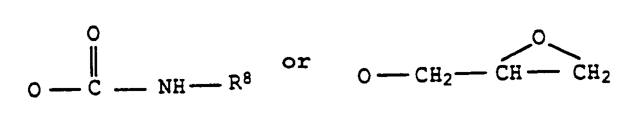
e) a bifunctional compound of the general formula IIe
Z¹-R¹⁰-Z² IIe
where
R¹⁰ is alkylene of from 1 to 50 carbon atoms which may be interrupted by one or more nonadjacent oxygen atoms and/or contain one or more mutually nonvicinal hydroxyl groups, and
Z¹ and Z² are each chlorine, bromine, isocyanate or one of the groups 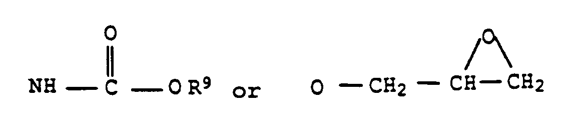
or OR⁹ and
C) from 0.25 to 1.0 mol per gram atom of amine nitrogen in I of a benzyl halide of the general formula III 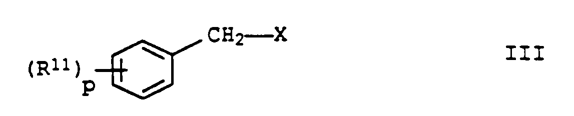 where
p is from 0 to 2 and
R¹¹ is C₁-C₄-alkyl, C₁-C₄-alkoxy, fluorine, chlorine or bromine.

2. A quaternized condensation product as claimed in claim 1, wherein R¹, R² and R³ of the trialkanolamine I used are identical and are each 1,2-ethylene or 1,2-propylene.

3. A quaternized condensation product as claimed in claim 1 or 2, wherein compound II is one of the following substances:
urea (II b, R⁷=R⁸=H, n=0, r=1)
hexamethylene-1,6-diurea (II b, R⁶=(CH₂)₆, R⁷=R⁸=H, m=n=r=1)
epichlorohydrin (II c, X=Cl)
ethylene carbonate (II a, R⁴-R⁵=O-CH₂CH₂-O, n=0)
1,3-propylene carbonate (II a, R⁴-R⁵=O-CH₂CH₂CH₂-O, n=0).

4. A quaternized condensation product as claimed in any of claims 1 to 3, wherein compound III is benzyl chloride (X=Cl, p=0).

5. A process for preparing a quaternized condensation product as claimed in any of claims 1 to 4, which comprises reacting a precondensate formed from one or more trialkanolamines I of the stated viscosity range with one or more compounds IIa - IIe in an amount of from 0.01 to 0.3 mol per gram atom of amine nitrogen in I and then with from 0.25 to 1.0 mol per gram atom of amine nitrogen in I of a benzyl halide III.

6. The use of a quaternized condensation product as claimed in any of claims 1 to 4 as an aftertreating agent for fixing dyeings and prints on textile materials which contain cellulose fibers and have been dyed or printed with reactive or direct dyes.

7. An aftertreating process for fixing dyeings and prints on textile materials which contain cellulose fibers, which comprises using a quaternized condensation product as claimed in any of claims 1 to 4.

8. A process as claimed in claim 7 wherein the dyed or printed textile materials are treated with an aqueous solution which contains a quaternized condensation product as claimed in any of claims 1 to 4 in an amount of from 0.05 to 25 % by weight, based on the dry cellulose material, at from 5 to 100°C.

## Claims (Claims for the following Contracting State(s): ES)

1. A process for preparing a quaternized condensation product, which comprises reacting
A) a precondensate of one or more trialkanolamines of the general formula I 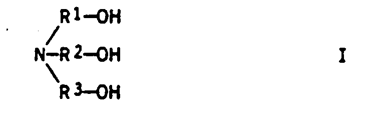 where R¹, R² and R³ are each 1,2-alkylene of from 2 to 4 carbon atoms, having a viscosity range from 5000 to 35,000 mPa.s for triethanolamine or from 100,000 to 600,000 mPa.s for triisopropanolamine or from 100,000 to 250,000 mPa.s for a cocondensate of triethanolamine and triisopropanolamine (in each case measured in the undiluted state at 20°C), with
B) from 0.01 to 0.30 mol per gram atom of amine nitrogen in I of one or more of the following compounds II:
a) a carboxylic acid or carboxylic acid derivative of the general formula IIa 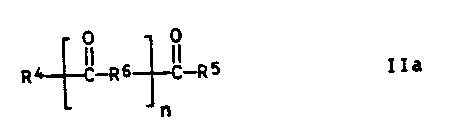 where
n is 0 or 1
R⁴ and R⁵ are each hydroxyl except if n is 0, or C₁-C₈-alkoxy which if n is 0 may be bonded together to form a five- or six-membered ring, or chlorine or bromine, and R⁶ is alkylene of from 1 to 50 carbon atoms which may be interrupted by one or more nonadjacent oxygen atoms,
b) a carboxamide of the general formula IIb 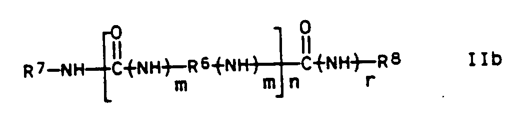 where
m, n, and r are each 0 or 1,
R⁷ is hydrogen or C₁-C₄-alkyl and
R⁸ is hydrogen, C₁-C₂₅-alkyl, C₂-C₂₅-alkenyl, or phenyl which may be substituted by C₁-C₄-alkyl, C₁-C₄-alkoxy, fluorine, chlorine or bromine,
c) an epihalohydrin of the general formula IIc 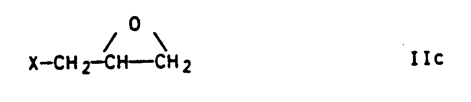 where
X is chlorine or bromine,
d) a monofunctional compound of the general formula IId
R⁹-Y IId
where
R⁹ is C₁-C₂₅-alkyl, C₂-C₂₅-alkenyl, or phenyl which may be substituted by C₁-C₄-alkyl, C₁-C₄-alkoxy, fluorine, chlorine or bromine, and
y is isocyanate or one of the groups 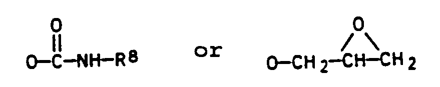
e) a bifunctional compound of the general formula IIe
Z¹-R¹⁰-Z² IIe
where
R¹⁰ is alkylene of from 1 to 50 carbon atoms which may be interrupted by one or more nonadjacent oxygen atoms and/or contain one or more mutually nonvicinal hydroxyl groups, and
Z¹ and Z² are each chlorine, bromine, isocyanate or one of the groups 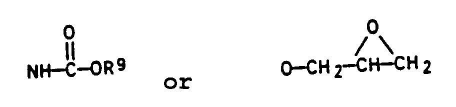
or OR⁹ and then with
C) from 0.25 to 1.0 mol per gram atom of amine nitrogen in I of a benzyl halide of the general formula III 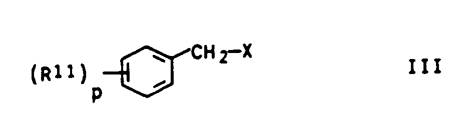 where
p is from 0 to 2 and
R¹¹ is C₁-C₄-alkyl, C₁-C₄-alkoxy, fluorine, chlorine or bromine.

2. A process for preparing a quaternized condensation product as claimed in claim 1, wherein R¹, R² and R³ of the trialkanolamine I used are identical and are each 1,2-ethylene or 1,2-propylene.

3. A process for preparing a quaternized condensation product as claimed in claim 1 or 2, wherein compound II is one of the following substances:
urea (II b, R⁷=R⁸=H, n=0, r=1)
hexamethylene-1,6-diurea (II b, R⁶=(CH₂)₆, R⁷=R⁸=H, m=n=r=1)
epichlorohydrin (II c, X=Cl)
ethylene carbonate (II a, R⁴-R⁵=O-CH₂CH₂-O, n=0)
1,3-propylene carbonate (II a, R⁴-R⁵=O-CH₂CH₂CH₂-O, n=0).

4. A process for preparing a quaternized condensation product as claimed in any of claims 1 to 3, wherein compound III is benzyl chloride (X=Cl, p=0).

5. The use of a quaternized condensation product as claimed in any of claims 1 to 4 as an aftertreating agent for fixing dyeings and prints on textile materials which contain cellulose fibers and have been dyed or printed with reactive or direct dyes.

6. An aftertreating process for fixing dyeings and prints on textile materials which contain cellulose fibers, which comprises using a quaternized condensation product as claimed in any of claims 1 to 4.

7. A process as claimed in claim 6 wherein the dyed or printed textile materials are treated with an aqueous solution which contains a quaternized condensation product as claimed in any of claims 1 to 6 in an amount of from 0.05 to 25 % by weight, based on the dry cellulose material, at from 5 to 100°C.

## Revendications (Revendications pour l'(les) Etat(s) contractant(s) suivant(s): AT, BE, CH, LI, DE, FR, GB, IT)

1. Produits de condensation quaternisés, constitué de
A) un produit de précondensation ou précondensat d'une ou plusieurs trialcanolamines de la formule générale I 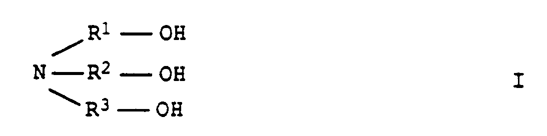 dans laquelle les substituants R¹ à R³ représentent des radicaux 1,2-alkylène possédant de 2 à 4 atomes de carbone, d'une plage de viscosités de 5.000 à 35.000 mPa.s pour la triéthanolamine, ou de 100.000 à 600.000 mPa.s pour la triisopropanolamine, ou de 100.000 à 250.000 mPa.s pour un produit de condensation mixte de triéthanolamine et de triisopropanolamine (viscosités à chaque fois mesurées à l'état non dilué et à 20°C) et
B) 0,01 à 0,30 mole par atome gramme d'azote d'amine dans I, d'un ou plusieurs des composés II qui suivent :
a) un acide carboxylique ou un dérivé d'acide carboxylique de la formule générale IIa 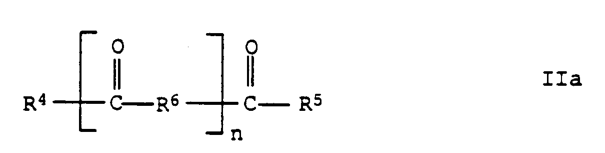 dans laquelle
n est égal à 0 ou à 1,
R⁴ et R⁵ représentent des radicaux hydroxyle, excepté dans le cas où n est égal à 0, ou des radicaux alcoxy en C₁ à C₈, qui, dans le cas où n est égal à 0, peuvent être mutuellement liés en un cycle pentagonal ou hexagonal, ou un atome de chlore ou de brome et
R⁶ représente un radical alkylène possédant de 1 à 50 atomes de carbone, qui peut être interrompu par un ou plusieurs atomes d'oxygène non voisins,
b) un amide d'acide carboxylique ou carboxamide de la formule générale IIb 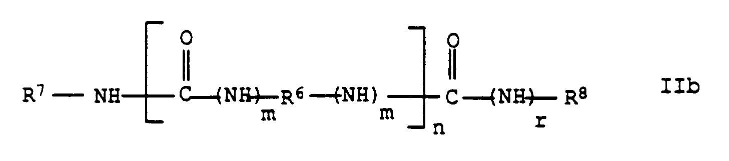 dans laquelle
m, n, r sont égaux à 0 ou à 1,
R⁷ représente un atome d'hydrogène ou radical alkyle en C₁ à C₄ et
R⁸ représente un atome d'hydrogène, un radical alkyle en C₁ à C₂₅, un radical alcényle en C₂ à C₂₅, ou un radical phényle, qui peut porter, à titre de substituants, des radicaux alkyle en C₁ à C₄, des radicaux alcoxy en C₁ à C₄, ainsi que des atomes de fluor, de chlore ou de brome,
c) une épihalogénhydrine de la formule IIc 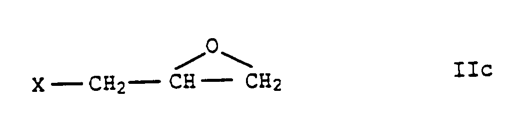 dans laquelle
X représente un atome de chlore ou de brome,
d) un composé monofonctionnel de la formule générale IId
R⁹-Y IId
dans laquelle
R⁹ représente un radical alkyle en C₁ à C₂₅, un radical alcényle en C₂ à C₂₅, ou un radical phényle, que peut porter, à titre de substituants, des radicaux alkyle en C₁ à C₄, des radicaux alcoxy en C₁ à C₄, comme aussi des atomes de fluor, de chlore ou de brome, et
Y représente un radical isocyanate ou l'un des radicaux qui suivent : 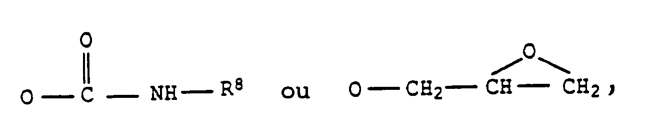
e) un composé bifonctionnel de la formule générale IIe
Z¹-R¹⁰-Z² IIe
dans laquelle
R¹⁰ représente un radical alkylène qui comporte de 1 à 50 atomes de carbone, qui peut être interrompu par un ou plusieurs atomes d'oxygène non voisins et/ou qui peut contenir un ou plusieurs radicaux hydroxyle qui ne se trouvent pas en position vicinale les uns par rapport aux autres et
Z¹, Z² représentent des atomes de chlore, de brome, des radicaux isocyanate, ou l'un des radicaux 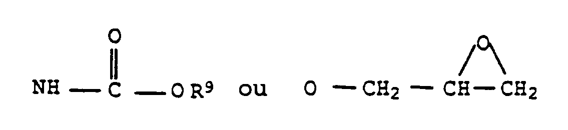
ou OR⁹ et
C) 0,25 à 1,0 mole par atome gramme d'azote d'amine dans I, d'un halogénure de benzyle de la formule générale III 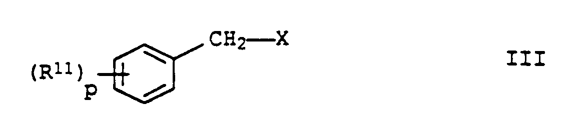 dans laquelle
p est égal à 0, 1 ou 2 et
R¹¹ représente un radical alkyle en C₁ à C₄, un radical alcoxy en C₁ à C₄, un atome de fluor, de chlore ou de brome.

2. Produits de condensation quaternisés suivant la revendication 1, dans lesquels les symboles R¹ à R³ de la trialcanolamine I mise en oeuvre sont à chaque fois identiques et représentent des groupes 1,2-éthylène ou 1,2-propylène.

3. Produits de condensation quaternisés suivant l'une quelconque des revendications 1 et 2, dans les
quels le composé II est l'une des substances suivantes: Urée
(II b, R⁷=R⁸=H, n=0, r=1)
Hexaméthylène-1,6-urée
(II b, R⁶=(CH₂)₆, R⁷=R⁸=H, m=n=r=1)
Epichlorhydrine
(II c, X=Cl)
Carbonate d'éthylène
(II a, R⁴-R⁵=O-CH₂CH₂-O, n=0)
Carbonate de 1,3-propylène
(II a, R⁴-R⁵=O-CH₂CH₂CH₂-O, n=0).

4. Produits de condensation quaternisés suivant l'une quelconque des revendications 1 à 3, dans lesquels on utilise, à titre de composé III, le chlorure de benzyle (X=Cl, p=0).

5. Procédé de préparation de produits de condensation quaternisés suivant l'une quelconque des revendications 1 à 4, caractérisé en ce que l'on fait réagir un produit de précondensation ou précondensat d'une ou plusieurs trialcanolamines I possédant la plage des viscosités indiquée avec un ou plusieurs composés IIa à IIe, en une proportion de 0,01 à 0,3 mole par atome gramme d'azote d'amine dans I et, ensuite, avec 0,25 à 1,0 mole par atome gramme d'azote d'amine dans I d'un halogénure de benzyle III.

6. Utilisation des produits de condensation quaternisés suivant les revendications 1 à 4, à titre d'agents de posttraitement pour la fixation de teintures et d'impressions sur des matières textiles contenant des fibres de cellulose, qui ont été teintes ou imprimées avec des colorants réactifs ou des colorants directs.

7. Procédé de posttraitement pour la fixation de teintures et d'impressions sur des matières textiles contenant des fibres de cellulose, caractérisé en ce que l'on utilise à cette fin les produits de condensation quaternisés suivant les revendications 1 à 4.

8. Procédé suivant la revendication 7, caractérisé en ce que l'on traite les matières textiles teintes ou imprimées par une solution aqueuse qui contient les produits de condensation quaternisés suivant l'une quelconque des revendications 1 à 4, en une proportion de 0,05 à 25% en poids, par rapport à la matière cellulosique séchée, à des températures de 5 à 100°C.

## Revendications (Revendications pour l'(les) Etat(s) contractant(s) suivant(s): ES)

1. Procédé de préparation de produits de condensation quaternisés, caractérisé en ce que l'on fait réagir
A) un produit de précondensation ou précondensat d'une ou plusieurs trialcanolamines de la formule générale I 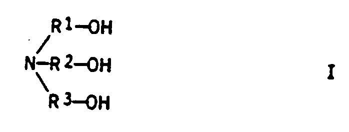 dans laquelle les substituants R¹ à R³ représentent des radicaux 1,2-alkylène possédant de 2 à 4 atomes de carbone, d'une plage de viscosités de 5.000 à 35.000 mPa.s pour la triéthanolamine, ou de 100.000 à 600.000 mPa.s pour la triisopropanolamine, ou de 100.000 à 250.000 mPa.s pour un produit de condensation mixte de triéthanolamine et de triisopropanolamine (viscosités à chaque fois mesurées à l'état non dilué et à 20°C) avec
B) 0,01 à 0,30 mole par atome gramme d'azote d'amine dans I, d'un ou plusieurs des composés II qui suivent :
a) un acide carboxylique ou un dérivé d'acide carboxylique de la formule générale IIa 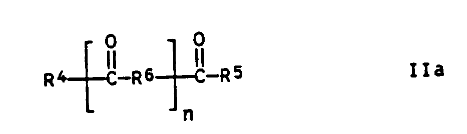 dans laquelle
n est égal à 0 ou à 1,
R⁴ et R⁵ représentent des radicaux hydroxyle, excepté dans le cas où n est égal à 0, ou des radicaux alcoxy en C₁ à C₈, qui, dans le cas où n est égal à 0, peuvent être mutuellement liés en un cycle pentagonal ou hexagonal, ou un atome de chlore ou de brome et
R⁶ représente un radical alkylène possédant de 1 à 50 atomes de carbone, qui peut être interrompu par un ou plusieurs atomes d'oxygène non voisins,
b) un amide d'acide carboxylique ou carboxamide de la formule générale IIb 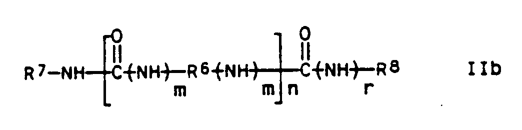 dans laquelle
m, n, r sont égaux à 0 ou à 1,
R⁷ représente un atome d'hydrogène ou radical alkyle en C₁ à C₄ et
R⁸ représente un atome d'hydrogène, un radical alkyle en C₁ à C₂₅, un radical alcényle en C₂ à C₂₅, ou un radical phényle, qui peut porter, à titre de substituants, des radicaux alkyle en C₁ à C₄, des radicaux alcoxy en C₁ à C₄, ainsi que des atomes de fluor, de chlore ou de brome,
c) une épihalogénhydrine de la formule IIc 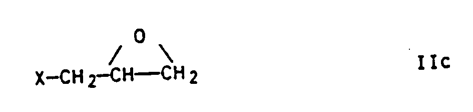 dans laquelle
X représente un atome de chlore ou de brome,
d) un composé monofonctionnel de la formule générale IId
R⁹-Y IId
dans laquelle
R⁹ représente un radical alkyle en C₁ à C₂₅, un radical alcényle en C₂ à C₂₅, ou un radical phényle, que peut porter, à titre de substituants, des radicaux alkyle en C₁ à C₄, des radicaux alcoxy en C₁ à C₄, comme aussi des atomes de fluor, de chlore ou de brome, et
Y représente un radical isocyanate ou l'un des radicaux qui suivent : 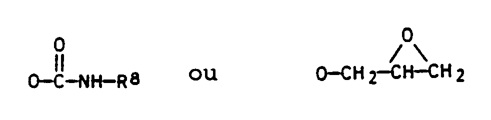
e) un composé bifonctionnel de la formule générale IIe
Z¹-R¹⁰-Z² IIe
dans laquelle
R¹⁰ représente un radical alkylène qui comporte de 1 à 50 atomes de carbone, qui peut être interrompu par un ou plusieurs atomes d'oxygène non voisins et/ou qui peut contenir un ou plusieurs radicaux hydroxyle qui ne se trouvent pas en position vicinale les uns par rapport aux autres et
Z¹, Z² représentent des atomes de chlore, de brome, des radicaux isocyanate, ou l'un des radicaux 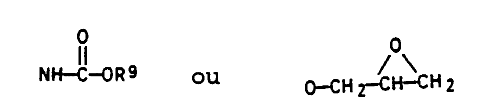
ou OR⁹ et, ensuite, avec
C) 0,25 à 1,0 mole par atome gramme d'azote d'amine dans I, d'un halogénure de benzyle de la formule générale III 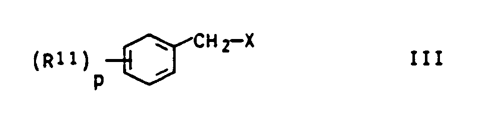 dans laquelle
p est égal à 0, 1 ou 2 et
R¹¹ représente un radical alkyle en C₁ à C₄, un radical alcoxy en C₁ à C₄, un atome de fluor, de chlore ou de brome.

2. Procédé de préparation de produits de condensation quaternisés suivant la revendication 1, caractérisé en ce que les symboles R¹ à R³ de la trialcanolamine I mise en oeuvre sont à chaque fois identiques et représentent des groupes 1,2-éthylène ou 1,2-propylène.

3. Procédé de préparation de produits de condensation quaternisés suivant l'une quelconque des revendications 1 et 2, caractérisé en ce que le composé II est l'une des substances suivantes:
Urée
(II b, R⁷=R⁸=H, n=0, r=1)
Hexaméthylène-1,6-urée
(II b, R⁶=(CH₂)₆, R⁷=R⁸=H, m=n=r=1)
Epichlorhydrine
(II c, X=Cl)
Carbonate d'éthylène
(II a, R⁴-R⁵=O-CH₂CH₂-O, n=0)
Carbonate de 1,3-propylène
(II a, R⁴-R⁵=O-CH₂CH₂CH₂-O, n=0).

4. Procédé de préparation de produits de condensation quaternisés suivant l'une quelconque des revendications 1 à 3, caractérisé en ce que l'on utilise, à titre de composé III, le chlorure de benzyle (X=Cl, p=0).

5. Utilisation des produits de condensation quaternisés suivant les revendications 1 à 4, à titre d'agents de posttraitement pour la fixation de teintures et d'impressions sur des matières textiles contenant des fibres de cellulose, qui ont été teintes ou imprimées avec des colorants réactifs ou des colorants directs.

6. Procédé de posttraitement pour la fixation de teintures et d'impressions sur des matières textiles contenant des fibres de cellulose, caractérisé en ce que l'on utilise à cette fin les produits de condensation quaternisés suivant les revendications 1 à 4.

7. Procédé suivant la revendication 6, caractérisé en ce que l'on traite les matières textiles teintes ou imprimées par une solution aqueuse qui contient les produits de condensation quaternisés suivant l'une quelconque des revendications 1 à 6, en une proportion de 0,05 à 25% en poids, par rapport à la matière cellulosique séchée, à des températures de 5 à 100°C.
